Europäisches Patentamt

European Patent Office

Office européen des brevets

(11) Publication number: **0 100 357**
**B1**

(12) **EUROPEAN PATENT SPECIFICATION**

(45) Date of publication of patent specification: **06.07.88**

(51) Int. Cl.⁴: **G 01 N 21/59, G 01 B 11/14**

(21) Application number: **83901004.8**

(22) Date of filing: **01.02.83**

(86) International application number:
**PCT/US83/00145**

(87) International publication number:
**WO 83/02667 04.08.83 Gazette 83/18**

(54) **METHODS AND MEANS FOR UTILIZING APODIZED BEAMS.**

(30) Priority: **01.02.82 US 344528**

(43) Date of publication of application:
**15.02.84 Bulletin 84/07**

(45) Publication of the grant of the patent:
**06.07.88 Bulletin 88/27**

(84) Designated Contracting States:
**AT BE CH DE FR GB LI LU NL SE**

(56) References cited:
**US-A-3 470 377**
**US-A-3 504 979**
**US-A-3 790 276**
**US-A-3 807 876**
**US-A-3 857 641**
**US-A-3 989 385**
**US-A-4 118 109**
**US-A-4 284 350**

(73) Proprietor: **SOUTHERN CALIFORNIA EDISON COMPANY**
**2244 Walnut Grove Avenue**
**Rosemead California 91770 (US)**
(73) Proprietor: **Desert Research Institute**
**Sage Building Stead Facilities**
**Reno Nevada 89506 (US)**

(72) Inventor: **LEE, Paul H.**
**6877 Del Playa Drive**
**Goleta, CA 93017 (US)**
Inventor: **HOFFER, Thomas E.**
**244 Smithridge Park**
**Reno, NV 89502 (US)**
Inventor: **SCHORRAN, David E.**
**2187 Westfield Avenue**
**Reno, NV 89509 (US)**

(74) Representative: **Harrison, David Christopher et al**
**MEWBURN ELLIS & CO 2/3 Cursitor Street**
**London EC4A 1BQ (GB)**

Courier Press, Leamington Spa, England.

## Description

This invention relates to the utilization of beams of electromagnetic radiation. With the invention, laser beams are used to provide a transmissometer and a transmissivity measuring method.

A transmissometer is a device for determining the optical transmission characteristics of a particular medium. The optical transmission factor is defined as the ratio of the final intensity to the initial intensity of light after it has traversed a medium. Clearly this factor varies with the path length through the medium as well as the characteristic extinction of the medium.

In the atmosphere, the transmission in the visible portion of the spectrum is effected principally by scattering. As a consequence the transmission is a weak function of colour and any convenient wave length can be used for such measurements. Preferably a laser beam is used, but this does not provide as accurate information as desired, because of beam steering difficulties and non-optimized beam profiles.

In the prior art of lasers not related to transmissometer devices, laser beam cross sectional profiles have been apodized by means of filters. Such filters present a major detrimental effect on the intensity of the beam propagated from the device and hence long path length transmissometer applications are not practical.

Overall the effective results obtained from transmissometers are relatively poor.

By this invention the applicant has provided for utilization of a unique form of flattening a beam which is a subject of WO 83/02673 (EP—A—100354), to which reference is directed.

In the prior art, US—A—3,698,820 (Hanff) there is disclosed means for measuring the transmissive power of the atmosphere where there are two transmitters and receivers, and wherein refinement of the transmitted beam is not an issue, whether by apodization or otherwise. Likewise in US—A—4,225,245 (Roiret) the means for measuring the optical transmissive power of the atmosphere for application of determining visibility at airports uses a broad spectrum light source without any refinement. Notably in both these US patents signals are obtained from both transmitting and receiving ends which are regarded as active from, at least, electrical considerations.

US—A—3,419,333 (Towner) is another exemplary transmissometer system using a broad spectrum light source for determining range of visibility along an airport runway.

More specifically dealing with aligning beams such as laser beams there is US—A—4,146,329 (King) which has an automated system for aligning the optics and which uses a null position sensor to servo control a mirror. In US—A—3,942,894 (Maier) there is disclosed a self-reference retransmitting alignment sensor for a collimated light beam. Once again no reconsideration is given to refine the laser beam.

In US—A—3,894,804 (Detwiler) there is disclosed simply an intensity level display apparatus for allowing measurement of beam shape and intensity during alignment of an optical system.

In US—A—3,504,979 an optical communication system provides apparatus and method having means for maintaining alignment between projector and receiver, as defined in the preamble of claims 1 and 13.

In US—A—3,857,641 a visibility meter or smoke detector includes beam-chopping means and a beam-splitter.

US—A—4,118,109 shows how the deviation of a beam may be effected by wedge prisms, which may be relatively adjustable in rotation to alter the degree of deviation.

US—A—3,807,876 discloses a gas densitometer and analyser in which part of a split beam is retained within the device and used as a reference signal.

In review of this art it is apparent that in the transmissometer utilization of a laser beam, only a broad beam has been propagated so that the results of transmissivity which can be obtained are coarse and lack as much definition as would otherwise be desirable.

The invention thus provides apparatus as claimed in claim 1 and also a corresponding method of measuring transmissivity as defined in claim 13.

The "point of inflection" of the intensity curve is that point between the low and maximum point of the curve where the curve changes from concave upwards to concave downwards.

In the drawings:

Figure 1 is the optics layout of a transmissometer utilizing a laser beam.

Figure 2 is a diagrammatic view illustrating a conical scan of a laser beam of Gaussian cross-sectional intensity profile.

Figure 3 is an illustrative two part figure showing scans of retroreflector array for beam steering feedback. The return beam received when the laser points to the right of the retroreflector (shown at the left part of this Figure) is electronically subtracted from the laser points to the left of the retroreflector. In the right part of the Figure, the electronic difference is obtained between the signal returned when the beam points to the bottom of the array and the top of the reflector for feedback.

Figure 4 is a diagrammatic view of aligning means for beam steering including matched wedge prisms and also the relative vector diagrams.

Figure 5 is a block diagram of the major electronic components associated with the transmissometer shown in Figure 1.

Figure 6 is a block diagram of the electronic components shown in relation to the transmissometer of Figure 1.

Figure 7 is a diagrammatic component functional layout of an earth motion detector using an apodized laser beam.

Figure 8 is a two part figure showing the sector scans of a retroreflector array similar to Figure 3, and in this case is applied to an earth motion detector device.

Figure 9 is a graphical representation of a signal response as against time in an earth motion detector device.

Detailed description

A transmissometer includes a laser source 10 which generates a red laser beam 11 to measure atmospheric extinction over long paths.

The laser beam 11 is divided by a beam splitting means 12 which includes a polarizing beam splitter 13 such that the beam 11 is divided into a main component 15 and a reference beam 16. The source splitting means 12 also includes a mirror 17 to direct the reference beam 16 substantially parallel to the propagated main beam 15 to a beam chopping means 18.

The device 14 is constituted substantially by mounting various elements on a single rigid plate 19 which is located at a generating point. At a remote point indicated by numeral 20 which may be at a distance between two kilometers and ten kilometers as indicated by arrow 21 there is located a retroreflector array 22 for returning the beam 15 propagated from the device back to the transmitting device as beam 23.

The laser source 10 provides a helium-neon laser as the beam source, and is selected to have an output power of 10 milliwatts at a wave length of 633 nanometers. It operates in a single transverse mode with a Gaussian intensity profile. The beam divergence is about one milliradian and the output light is plane polarized.

The beam splitting means 12 divides the beam 11 so that the reference beam 16 contains about ten percent of the intensity of the main beam 11. The intensity of the reference beam 16 can be coarsely adjusted by rotating the laser beam 11 about its axis and the reference beam 16 is then turned to be parallel to the main beam 15 for entry into the laser chopper assembly 18. Such assembly 18 includes a rotatable disc rotating the laser beam 11 about its axis and the reference beam 16 is then turned to be parallel to the main beam 15 for entry into the laser chopper assembly 18. Such assembly 18 includes a rotatable disc with axially spaced slots, two sets of slots being at difference radii and being used to modulate the main beam 15 and the reference beam 16 at different frequencies.

The reference beam 16 is then fed to a reference signal focusing mechanism 24 wherein the modulated reference beam 16 is focused by a lens 25 onto the end of a fiber optical bundle 26. Also part of the reference signal focusing mechanism 24 is a polarizing element 27, and, in the housing 28 of the focusing mechanism 24, there is mounting space ahead of the lens 25 for filters to further attenuate the reference beam strength 16. Coarse steps in attenuation can be provided by fixed absorption filters, and finer attenuation control is provided by the rotatable polarizer 27.

The main beam 15 is directed to conical scan means 29 which includes a pair of wedges 30 and 31 that rotate continuously at 5 Hz. This rotation results in a conical scan of the main beam 15. The purpose of the conical scan is two fold: firstly, it results in a time-averaged apodization of the output beam 15 and, secondly, provides a returned beam 23 which is suitably modulated for servo pointing the beam 15 towards the retroreflector means 22.

The prisms 30 and 31 are relatively rotatable to each other in the housing 29 about an axis substantially parallel to an undeflected axis of the beam 15 and, after this is effected as desired, locking screws set the prisms 30 and 31 in a position at a selected radial angle relative to each other. With the prisms 30 and 31 locked so there is a requisite deflection of the laser beam 11 as indicated by angle 32 between the nonreflected central axis 33 of the laser beam 11 and the central axis 34 of the deflected laser beam. Such deflected laser beam 11 would transcribe a conical shape as illustrated by the diverging cone 35 which over a scan cycle transcribes a circle 36. The peak of the apodized Gaussian beam in its conical scan about the laser non-deflected axis 32 traces a circle depicted by dotted line 37. Two circles 36 and 37 are illustrated in the far field as being at the remote point which is at retroreflector 22. The direction of the scan is depicted by arrows 38 at the scanning housing 29 and 39 on the retroreflector array 22.

The device also includes an alignment mirror 40 which is adjustable and is used for the initial alignment of the propagated main beam 15.

The main beam 15 is then directed to vertical servo means 41 and thereafter to horizontal servo means 42. The servo means 41 and 42 are devices which are driven by the output of the servo electronics to direct the main beam 15 toward the retroreflector 20. A further elaboration of these principles are set out below.

Each of the servo means 41 and 42 has a pair of prisms 43 and 44 which are aligned so that as the beam 15 passes through the wedge prisms 43 and 44 the beam 15 is deflected. The prisms 43 and 44 are relatively radially rotatable in opposite directions and the amount of rotation is controlled by a fine angle stepper motor. As the wedges 43 and 44 rotate the magnitude of the deflection of beam 15 can change from a minimum of zero to a maximum twice the deviation angle of the wedge prisms 43 and 44.

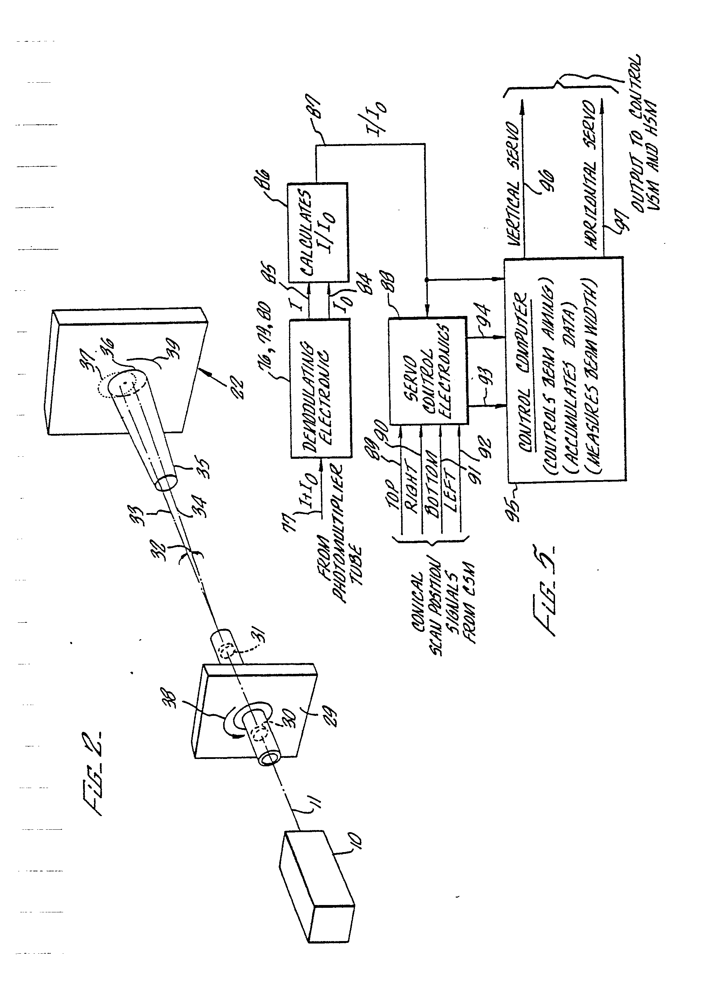

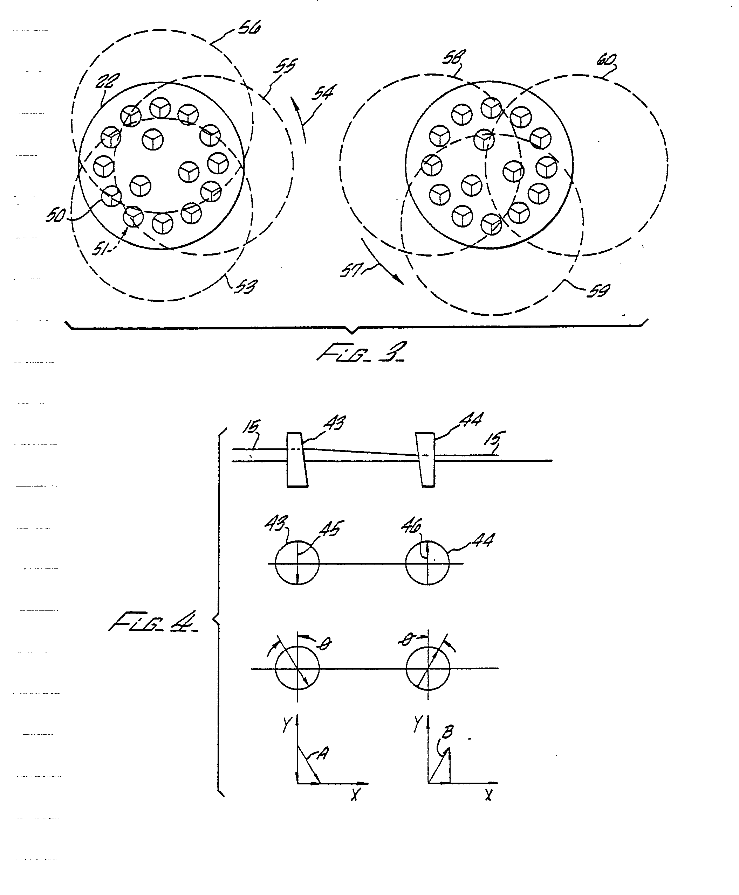

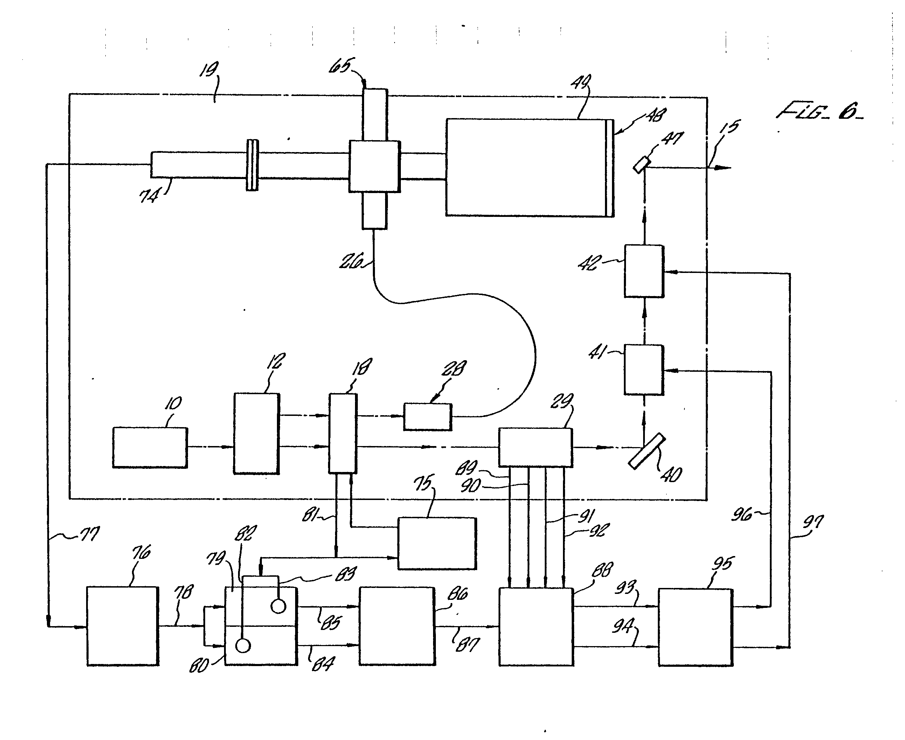

In relation to Figure 4 the aligning means for steering the beam 15 shows the two prisms 43 and 44. The beam 15 incident to both prisms 43 and 44 shows no net deflection where the wedge 44 cancels the deflection effected by the wedge 43. This is further highlighted in the front view of the prisms 43 and 44 where the axes 45 and 46 in the respective prisms indicate the cancellation of deflection. As illustrated by turning the axes 45 and 46 through an angle theta oppositely through each other the net deflection is to the right hand side as represented by the sum of vectors A+B.

The vertical component of deflection along the Y axes cancel out while the horizontal components of deflection along the X axes are additive.

After passing through the servo means 41 and 42 the beam 15 is directed to an output mirror 47 which launches the main beam 15 for propagation from the device 14 towards the remote point 20 where the retroreflector array 22 is set up. The axis of launch of beam 15 is the same as the axis 48 about which the receiving telescope 49 is mounted on the device 14.

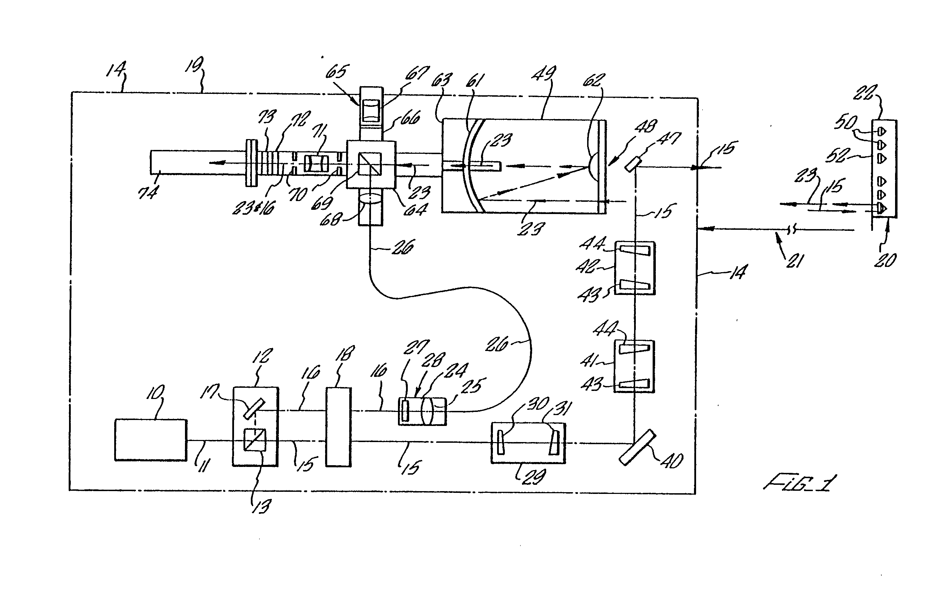

The retroreflector array 22 effectively returns the beam 15 along path 23 so as to provide a folded measuring path. The array 22 employs fifteen corner cubic reflector elements 50, each side of which measures 2.5 centimeters. In Figure 3 the array is illustrated showing two concentric circles of the cubes 50, a larger outer circle 51 containing 12 of the cubes and a smaller inner circle in which the remaining three cubes are mounted on the circumference.

As the beam 15 is projected, after conical scanning, from the device 14 to the retroreflector array 22 it sweeps over the face 52 of the array 22 so that different cubic members 50 of the array 22 are subjected to different intensities. Thus in the left hand figure of Figure 3 the phantom circle 53 indicates the beam 15 at the start of the scan to the right, the scan following the direction of arrow 54. Phantom circle 55 indicated the beam 15 in the middle of the scan to the right and phantom circle 56 indicates the beam 15 just completing the scan to the right. In the right hand part of Figure 3 the scan again follows arrow 57 and phantom circle 58 indicates beam 15 at the start of a scan to the bottom, phantom circle 59 indicated beam 15 in the middle of the scan to the bottom and phantom circle 60 indicates the beam 15 just completing the scan to the bottom. The scans of the retroreflective array 22 provides for beam steering feedback. The return beam 23 received during the scan of the right of the retroreflector 22 is electronically subtracted from the scan to the left of the retroreflector 22 and this difference represents the beam aiming error in the horizontal plane. Similarly the difference is computed for the right part of Figure 3 during scans to the bottom of the retroreflector 22 and the top of the retroreflector 22. This difference represents the beam aiming error in the vertical plane.

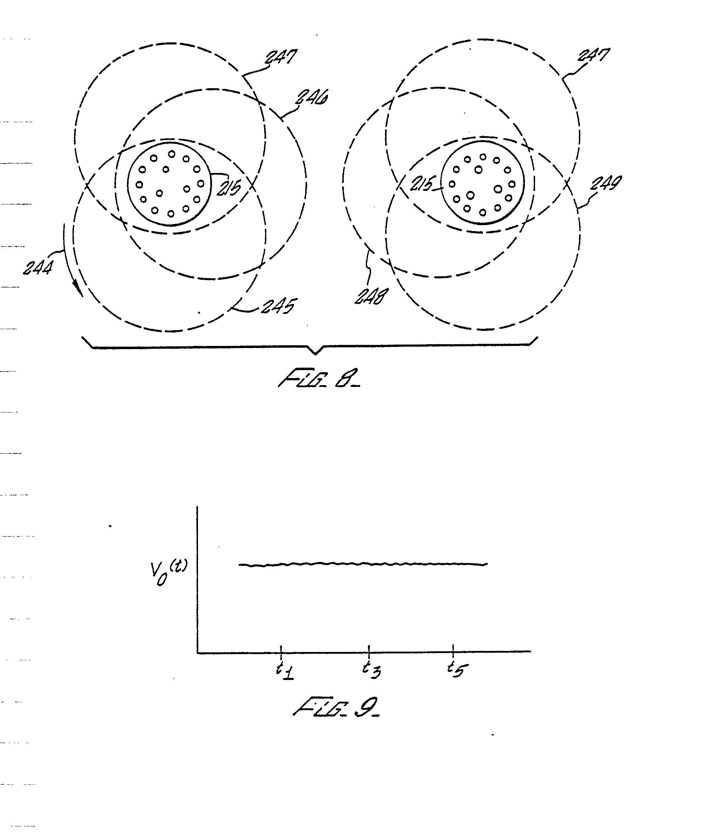

The phantom circles 53, 56, 57, 58, 59 and 60 are only illustrative of the scans. In practice, the scans will usually completely cover the retroreflector array as illustrated in Figure 8.

Retrieving means includes a receiving means for the retrieving of information from the beam 15 propagated to the remote point 22, and this includes the receiving telescope 49 which is used to collect and focus the reflected laser beam 23. The receiving telescope 49 includes a 12.5 centimeter diameter reflecting telescope with a primary mirror 61 and a secondary mirror 62. These mirrors 61 and 62 are mounted so that the beam 23 is centralized to pass through an aperture in the primary mirror 61 and through rear housing wall 63 of the telescope 49. In place of an eye piece for the telescope 49 there is a signal combining means 64 which receives both the reference beam 16 through the fibre optic 26 and the return beam 23 and in turn directs these beams to a translational means 74 for translating the beam intensities to electrical parameters.

A small fraction of the combined beams 16 and 15 are directed towards an auxiliary eye piece 65 to help in aligning the device 14. The eye piece 65 includes a reticle 66 and an ocular 67.

The fibre optic 26 is connected to resolver means through the signal combining means 64 through a lens 68 which assists in focusing the reference beam 16 to a polarizing beam splitter 69 within the signal combining means 64. The main portion of the beam intensity of the return beam 23 and the reference 16 is passed to the resolver means through a series of baffles 70 between which is placed an ocular 71 and thereafter to a polarizer 72 and narrow band pass filter 73 which effectively collimates and filters the beam 23 and 16 prior to entry into the translational means 74, which is a photomultiplier tube.

In designing the signal combining means 64, the light from both beams 16 and 23 is designed to fall exactly in the same area of a photocathode of the photomultiplier means 74. Also the combined beams 16 and 23 are collimated when passing through the polarizer 72 and the narrow band pass filter 73 and the baffles 70 effectively act as field and aperture stops for suppression of any stray light.

The photomultiplier tube 74 is a commercially available high gain tube which has an end-on-cathode with a high quantum efficiency at the wave length of the helium-neon laser.

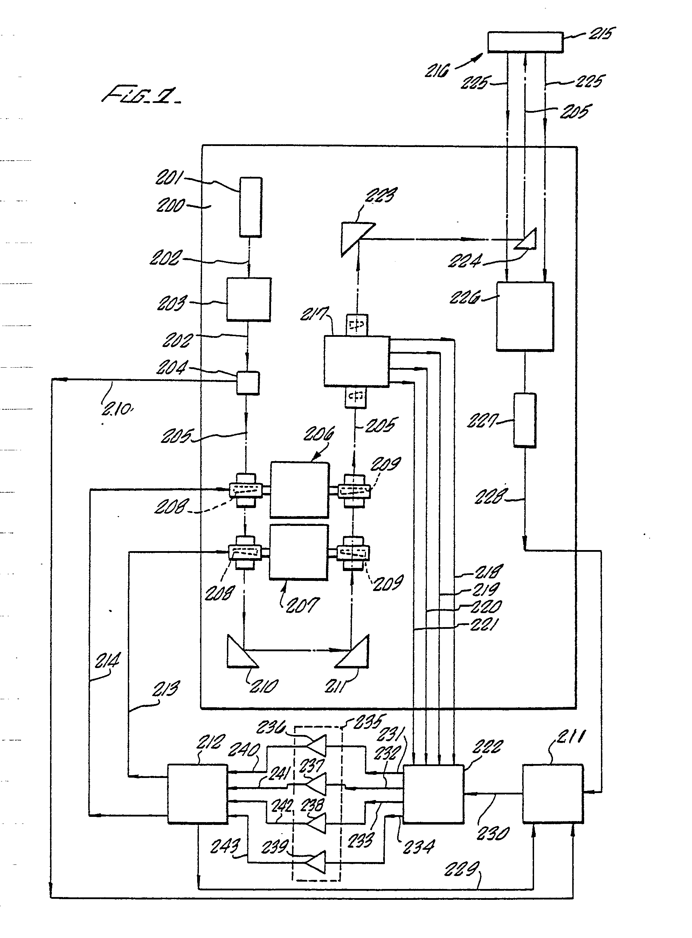

Turning now to the electronic components of the transmissometer in relation to the device illustrated in Figure 1 reference is made to Figures 5 and 6 which illustrate the major electronic components and functional lay out in relation to the transmissometer.

The light or beam chopping means 18 for modulating the main beam 15 and reference beam 16 is controlled by a chopper frequency control 75 which includes a commercially available motor speed control that provides for a stable chopping frequency. The signal conditioning electronics includes a unit which adjusts the signal gain through a voltage controlled amplifier 76 which receives the electrical parameter signal representative of the reference beam intensity 16 and return beam intensity 23, such signals passing from the photomultiplier tube 74 to the voltage controlled amplifier 76 along line 77. The output from the amplifier 76 is fed along line 78 to demodulating and discriminating units 79 and 80 which are also fed along lines 81, 82 and 83 with the chopper frequency from the chopper frequency control circuit 75. The demodulator and discriminating circuitry feed the separated reference signal along line 84 and separated return signal along 85 to a ratiometric amplifier 86 which outputs along line 87 a ratio of the return signal over the reference signal.

This ratio is fed by line 87 to the servo control electronics 88 which is interfaced circuitry to process signals from the conical scan means 29 indicating scanned positions. These signals are indicated as entering the servo control electronics along lines 89, 90, 91 and 92. Line 89 would represent a signal relative to the top scan position from the scan means 29, line 90 indicate a signal representative of the right scan position from the scan means 29, along line 91 passes a signal from the bottom scan position of the scan means 29 and along line 92 passes a signal from the left scan position of the scan means 29.

The servo control electronics 88 calculates transmission measurements from these outputs and generates a vertical error signal along line 93 and a horizontal error signal along line 94 such signals providing information about the beam position. Signals along lines 93 and 94 are directed to a field data acquisition computer 95 which includes a CMOS computer used for data acquisition and the control of all functions of the transmissometer. The computer 95 develops the proper control strategy to drive stepper motors of the vertical servo means 41 and horizontal servo means 42 through interrogation of the error signal from the servo control electronics, and in this manner minimizes pointing error. The vertical control signal passes from the computer 95 along line 96 to the vertical servo means 41 and the horizontal control signal passes from the computer 95 along line 97 to the horizontal servo means 42. The control computer controls the aiming of the beam 15, accumulates data, and measures the beam width to thereby obtain information representative of the physical characteristics at either of, or between, the transmitting point of the device 14 and the remote point 20 of the retroreflector array 22. In this fashion information is obtained about the transmissivity between the generating point and the remote point 20.

In addition to the flattening (apodization) of the laser beam 15 achieved by the conical scanning means 29, the conical scan technique provides a means for pointing the laser beam 15 at the retroreflector array 22. The feedback signals are derived from the periodic varying intensity of the return beam 23 in its conical sweep as diagrammatically indicated by the circle 36 in Figure 2 and the phantom circles 53, 55 and 56 of the left hand part of Figure 3 and 58, 59 and 60 on the right hand part of Figure 3. Conical scan position signals from the conical scan means 29 time the input of the return signal intensities into a pair of differential amplifiers. One amplifier subtracts the return signal intensity as the beam 15 passes to the left of the retroreflector array 22 from the intensity returned as the beam 15 passes to the right of the retroreflector array 22. The other amplifier is used to compute differences in the return signal intensity as the beam 15 passes over the top and bottom of the retroreflector array 22. If both differences are zero the beam is centered about the retroarray. If the differences are other than zero, the signs of the differences indicate the direction in which the beam 15 is off target (right or left, up or down) and the magnitudes indicate the degree of positioning error. These error signals are used through the electronics described to control the servo means 41 and 42 which steer the beam 15 in the horizontal (left-right) and vertical (up-down) planes respectively. In other forms of the invention these planes may not be substantially perpendicular to each other.

Aiming of the beam 15 is accomplished by the alignment of the prisms 43 and 44 in the horizontal and vertical servo means 41 and 42. The physical principle involved in the adjustment has been described and in each means the wedges 43 and 44 are rotatable in opposite directions, preferably simultaneously, the amount of rotation is controlled by a fine angle stepper motor. As the wedges 43 and 44 rotate, the magnitude of the beam deflection can change from a minimum of zero to a maximum of twice the deviation of the angle of the wedge prisms 43 and 44.

The intensity of the reflected beam 23 collected by receiving telescope 49 is dependent not only on absorption and scattering but also on beam spreading due to atmospheric turbulence. This beam dispersion is an inherent feature created by the atmospheric medium and its contribution to changing transmission must be established. The technique selected by the applicants is normalization of the transmission through periodic beam width measurements. Beam width, in this application, is defined as the horizontal width between half intensity points of the main beam which, prior to flattening has a substantially Gaussian cross-section and is illustrated in WO 83/02673 (EP—A—100354). It can be measured by a controlled deflection of the beam from its centered position.

In practice, the wedges 43 and 44 of the horizontal servo means 42 are rotated from the centered position in one direction and until the returned signal intensity falls to one half its initial value. The prisms 43 and 44 are then rotated in the opposite direction past the center point to the opposite half intensity point. The wedges 43 and 44 are then returned to the central position. The beam width is calculated from the pulse count needed to drive the horizontal servo means 42 between the half intensity points and the initial alignment position of the horizontal steering prisms 43 and 44 in the servo means 42.

In practice, a sub routine in the field data acquisition computer is activated periodically, preferably hourly, to interrupt the transmission measurement and make the beam width measurement. The transmission data are normalized to an average beam width during data processing.

The apodization through the conical scan means 29 creates a beam of uniform intensity when integrated over time. This means that within the beam volume all particles with identical physical characteristics will absorb and scatter light the same. This is not true of light beams that have Gaussian or other shapes to their cross-sections. This uniform intensity feature eliminates a common deficiency of laser transmissometers and other long path or far field transmissometers that do not use an apodized beam.

In the electronic retrieval means the servo control electronics 88 receives effectively signals of the combined return and reference intensities along line 87, four conical scan positions signals along lines 89, 90, 91 and 92 and the chopped frequency signal along line 81. The combined signal I and Io is initially discriminated by the demodulating electronics 76, 79 and 80 which lock in on the signals I and Io chopped at discrete frequencies. These signals are then electronically ratioed to obtain the transmission parameter I/Io, or T. This information is passed to the servo control electronics 88 and in turn to the computer 95. The servo control electronics 88 serves as an electronic interface between the electrooptical and the electro-mechanical components located on the optical table of the device 14 and the control computer 95. The four scan position signals from the conical scanning means 29 indicate the position of the beam 15 in its scan about the retroreflector 22. These signals are used to time the input of the transmission signal to two differential amplifiers. Differences in the transmission signals computed during top and bottom sector scans are integrated to develop a beam aiming error signal in the plane vertical to the scan access. Similarly, differences computed during the right and left sector scans are integrated to develop a beam aiming signal in the plane horizontal to the scan access. The vertical and horizontal error signals are passed along lines 93 and 94 to the computer 95 which generates servo control signals along lines 96 and 97 based upon the interrogation of the error signals. These control signals are then outputted to the appropriate servo means 41 and 42.

By this invention there has been developed a laser transmissometer which provides for the continual pointing of the laser beam 15 at a retroreflector array 22 thereby eliminating the errors associated with changes in the beam direction due to reflective index changes. This provides a means of normalizing the transmission data to minimize the effects of atmospheric turbulence on the dispersion of the beam 15 and provide a beam of uniform intensity.

The transmissometer is designed to operate in a field installation with a folded path of ten kilometers. A decided advantage of the application is facilitated by the electric passivity of the retroreflector array 22. The computer 95 effectively controls all functions of the transmissometer and it is anticipated that in operation automatic functioning for periods of a week or more without operator intervention will be possible. Furthermore the data from the transmissometer can be accessed by telephone using remote terminals that can be indefinitely far away.

In other applications of the device the receiving means which is constituted by the receiving telescope 49 and associated elements on the optical table can be located at the remote point 20, and through suitable telephone wire or radio connection the information for retrieval can be related to the control circuitry located suitably at the device 14.

An earth motion detector utilizing a laser beam of a substantially Gaussian cross-sectional profile which is conically scanned is next described.

The description relates to a determination of changes in the relative positions between a generating point where a transmitting device is located and a remote point where a retroreflector is located. The devices can be mounted on suitable foundations on the ground, and, obviously, in alternative applications of the detector the relative movement between physical structures on the ground could easily be determined in the same manner. Furthermore various of the devices and retroreflectors can be arranged at different points thereby to propagate laser beams in different directions, and in this fashion multidirectional indications of movement can be obtained.

In Figure 7 the earth motion detector functional layout illustrates a device which includes a rigid optical table 200 on which is mounted a laser source 201 which transmits a helium-neon laser beam 202 at a wave length of 633 nanometers (red) and a power of about four milliwatts. The beam 202 enters light chopper means 203 which is a device used to modulate the laser beam 202 to enhance detection of the returned optical signal. In this connection the chopper means 203 is associated with a reference signal detector 204 into which the beam 202 passes. The detector 204 includes a sensor to detect the modulation imparted by the light chopper means 203 and the information obtained thereby is used to further enhance the signal-to-noise ratio of the system. The signal detector 204 has two outputs: the main beam 205 for propagation from the earth motion detector device at the transmitting point and a modulation signal along line 210 to a signal conditioner 211 which is described further below.

Beam 205 passes from the detector 204 to a horizontal servo means 206 and thereafter to a vertical servo means 207 which act to align the beam 205 relatively in the horizontal and vertical planes.

Each of the servo means 206 and 207 includes wedge prisms 208 and 209, and the beam 205 firstly passes through prisms 208 and after reflection by mirrors 210 and 211 through prisms 209. This arrangement of the servo means 206 and 207 in the earth motion detector device is advantageous since the beam position can be steered by these devices very precisely.

The steering wedge prisms 208 and 209 are rotated through a worm gear drive in the servo means 206 and 207, and, this greatly enhances the resolution of beam positioning and beam position determination.

The worm gear drive includes a stepper motor drive wherein each pulse sent to the stepper outputs the shaft in a rotation by some incremental angle.

A control computer 212 sends signals along line 213 to control the vertical servo means 207 vertically and along line 214 to control the horizontal servo means 206 horizontally. The control computer 212 assigns a step count to one revolution of the steering wedges. The null position, where no deflection is effected by the steering wedges 208 and 209 is taken as step zero. This null position is indicated by a switch closure on each steering mechanism 206 and 207. Thereby the beam position can be noted by step position from the horizontal and vertical servo means 206 and 207.

The servo means 206 and 207 therefore are used to position the outgoing laser beam 205 on the axis of the reflector array 215. The horizontal servo means 206 corrects positioning errors in the horizontal plane to the laser beam 205 and the vertical servo means 207 corrects positioning errors in the plane vertical to the laser beam 205. The positioning information is recorded in the control computer 212 to produce a record of relative position of the transmitter at a transmitting point and the reflector array 215 at a remote point 216.

After passage through the servo means 206 and 207 the beam 205 passes to conical scanning means 217 which rotates the outgoing laser beam 205 in a manner so that the beam spot that reaches the reflector array 215 at least partially apodized sweeps around and over the reflector in a circular fashion. As this is done the position of the beam 205 on its sweep is electronically tagged and this information is used to develop a feedback signal to operate the servo means 206 and 207.

Signals as to the position of the conical scan means 217 are transmitted from the conical scan means 217 along lines 218, 219, 220 and 221 to a multiplexer unit 222. As with the transmissometer these signals give an indication of the top, right, bottom, and left positions of the conical scan means 217.

The output from the conical scan means 217 is reflected by a fixed mirror 223 to an output mirror 224 which launches the beam 205 for propagation to the remote reflector array 215 at remote position 216.

The retroreflector array 215 is made up of an array of corner cube reflectors 50 similar to that in the transmissometer and a characteristic of the corner cube reflectors is that they have a property of reflecting rays of the beam 205 that enter their field of view along a parallel path back to the transmitting device. The reflector array 215 cube reflector 50 outputs are relatively insensitive to changes in their angular position which makes them desirable for field applications at the remote point 216 which is electrically passive, in this preferred embodiment of the invention.

The reflected beam 225 is returned to receiving means for retrieval of the information contained thereon. The receiving means includes a receiver telescope 226, again similar to the transmissometer telescope, which is a small reflector-type telescope used to collect the return optical signal. The output of the telescope 226 is directed to a further detector translational means 227 which acts to convert the beam information into electrical signal parameters which are then transmitted along line 228 to the signal conditioner 211.

The signal along line 228 includes both the pure signal and a noise factor and through the signal conditioner 211 as modulated by the signal along line 210 from the reference signal detector 204 suitable discrimination is effected. The signal conditioner also receives a gain-control signal along line 229 from the control computer, and the function of the signal conditioner 207 is to discriminate the modulated returned signal along line 228 from the background noise and to scale the amplitude of this discriminated signal to an appropriate level. A conditioned return signal is outputted along line 230 to the multiplexer 222.

The multiplexer 222 receives four conical scanning signals alone lines 218, 219, 220 and 221 and the function of the multiplexer is to sort the return signal into four component signals. The four components represent the return signal intensity as the laser beam 205 points to the right, top, left, and bottom of the retroreflector array 215. The four components are outputted along lines 231, 232, 233 and 234 to an integrator 235.

The integrator includes four separate integrating components 236, 237, 238 and 239 which act to integrate each of the four component return signals along lines 231, 232, 233 and 234 respectively. The function of the integrator 235 is to average the input signals over a fixed time interval and the four average return signal components are output along lines 240, 241, 242 and 243 to the control computer 212.

The control computer 212 functions in a threefold manner: firstly, to record the position of beam 205; secondly, to develop the control strategy to maintain aim of the transmitted beam 205; and thirdly, to develop a gain-control signal to scale the amplitude of the return signal to a reasonable level, such signal passing along line 229 to the signal conditioner 207. The output from the control computer 212 are the vertical and horizontal control signals along lines 213 and 214 respectively to the servo means 207 and 208.

In the earth detection device it has been found desirable to over-apodize the intensity profile of the laser beam 205, and in this manner an over-apodized beam profile increases the sensitivity of the device to changes in position of the beam 205.

Time averaged apodization is the subject of WO 83/02673 (EP—A—100354) which was filed simultaneously with the present application and in that application profiles of Gaussian cross section, flattened (apodized) profiles and over-apodized profiles are illustrated. By having the over-apodized time-averaged beam intensity, a slight trough is formed at the point of central intensity and two gentle lobes are formed to either side thereof.

Viewed from a different standpoint this is calculated to increase the ratio of the error signal to the error in beam position horizontally across the beam. When there is a proportionately larger error signal produced for small changes in beam position horizontally across the beam, there is consequently increased sensitivity of the device to changes in relative position between the transmitting point and the remote point 216. The device is thereby of increased and more accurate sensitivity to relative positional changes.

Reference is made to Figures 8 and 9 for an understanding of the development of the feedback signal from the retroreflector array 215, such signal being contained as information in the beam 225.

In Figure 8 the retroreflector array is illustrated with phantom circle depicting the scan of the laser beam 205 in different positions over the array. The scan direction is indicated by arrow 244, and at the start of a scan to the right side the beam is projected on the array as indicated by circle 245 being at time t=t1. The scan thereafter moves to position as indicated by circle 246 at time t=t2. The beam position at completion of scan to the right is depicted by circle 247 at time t=t3.

In the right hand portion of Figure 8 the beam is depicted at commencement of the scan leftwardly at time t=t3 by circle 247. At time t=t4 the scan is depicted by circle 248 and just after completion of the scan to the left, the beam is depicted by circle 249 at time t=t5.

Referring to the informational exchange at the various time intervals, at time t1 the received return signal from beam 225 is shunted to the integrator 236 of integration means 235. At time t2 the return signal from beam 225 is shunted to integrator 237, while at that time the signal is retained on integrator 26. At time t3 the return signal is shunted to integrator 238 and the signal input to integrator 236 is terminated. At time t4 the return signal is shunted to integrator 239 and the signal to integrator 237 is terminated. The time t5 the return signal is shunted to integrator 238 is terminated. Thereafter the cycle repeats itself.

The average signals are passed along lines 240, 241, 242 and 243 respectively to the control computer 212 where they are sorted and stored in individual "sample and hold" means. After completion of a cycle the information averaged during the scan from t1 to t3 at laser beam 205 points to the right hand side of the retroreflector array 215 is from the information averaged during the scan from t3 to t5. This difference constitutes the horizontal error in beam aiming. Similarly, the difference is computed between the signals averaged from t2 to t4, and from t4 to a time t6 at which time the beam scan will be in the same position as depicted by circle 246 at time t2. This difference constitutes the vertical error in beam aiming.

Should the differences be zero then the scanning beam 205 is centered about the retroreflector array 215. Should the differences be other than zero their sign, positive or negative, indicates the direction which the beam 205 is off target, namely too far right, left, up, or down, and their magnitude is proportional to the distance the beam 205 is off target.

The control computer 212 utilizes these data to develop the servo control signals for transmission along lines 213 and 214 to center the scanning beam 205 about the retroreflector array 215. For instance, if the error signals indicate that the beam is low, the control computer 212 will output a train of electrical pulses to the vertical servo means 207 that will re-position the steering wedge prisms 208 and 209 of servo means 207 to raise the output beam 205. When a vertical error signal returns to zero the computer 212 will stop outputting pulses to the vertical servo means 207.

Figure 9 represents the output signal, as a voltage, for the relevant signals at the different time intervals indicated.

The transmitted and receiver may be deployed in different ways. With two earth motion detectors positioned the transmitting-receiving network for each could occupy the same structure or optical bench and the output beams 205 will be orientated at some known angle relative to each other. This angle may be such that the relative angle motions in the planes, vertical and horizontal, to the propagation axis of each system can be measured. Such a bi-directional system permits the differentiation of rotational motion from translational motion of the transmitting system.

For instance, with a single detector set up to output beam 205 in a northerly direction, should an earth motion occur that translates the transmitting/receiving network to the east, a shift in the horizontal plane would be recorded. This shift could be explained in several manners: for instance a transmitting-receiving network translation to the east; a retroreflector translation to the west; a transmitting/receiving rotation counterclockwise, or a combination of any one of these.

With the bi-directional system set up, for instance with one beam orientated north and another east the information obtained will eliminate incorrect conclusions as to the movement which did in fact occur. Thus a shift in the horizontal would be recorded by the first detector oriented north, and no horizontal shift would be recorded by the east orientated detector. Since a rotational motion of the transmitting/receiving network requires that horizontal shifts be recorded by both instruments simultaneously this horizontal shift would be eliminated. Thus the motion could be explained as the translation of the transmitting/receiving or as a translation of the retroreflector array associated with the northerly orientated detector.

In other examples should the angle between the output beams 205 be other than ninety degrees, say 120 degrees, then sufficient information would be recorded to determine that the transmitting/receiving network experienced an easterly translation.

**Claims**

1. Apparatus utilizing a laser beam (11) of electromagnetic radiation, said beam having a cross-sectional intensity profile which is substantially symmetrical about the maximum intensity point and has points of inflection, the apparatus including a device (14) for location at a transmitting point and including means for generating said electro-magnetic radiation beam for propagation from the transmitting point to a relatively remote point (20), beam scanning means (29), means (41, 42) for aligning the beam in response to alignment information derived from the beam returned from the remote point in at least one transverse plane relative to the direction of propagation of said beam from the transmitting point (10) towards said remote point (20), characterized by said beam scanning means (29) providing time-averaged apodization of said laser beam by deflecting the laser beam over a predetermined area at said remote point to provide over a period of time, a substantially uniform intensity over a predetermined portion of said area, said predetermined portion having the width of said laser beam cross-sectional intensity profile between substantially half intensity points of the latter, the said remote point (20) being in the far field, and means (64, 74, 86) for retrieving from said beam, after propagation to the remote point in the far field, information representative of the transmissivity characteristics between the transmitting point and the remote point.

2. Apparatus as claimed in claim 1 wherein the means for obtaining information from the beam is contained within the device (14) at the transmitting point.

·3. Apparatus as claimed in claim 2 including retroreflector means (50) for returning the propagated beam from the remote point to the device.

4. Apparatus according to claim 3 wherein the retroreflector means includes an array of substantially cubic reflector elements.

5. Apparatus according to claim 4 wherein the cubic reflector elements are arranged in two concentric circles, a lesser number of elements in an inner circle and a larger number in an outer circle.

6. Apparatus according to any one of the preceding claims wherein the scanning means (29) includes prism means (30, 31) adapted to deflect the beam, such prism means being adapted to rotate about an axis substantially parallel to the undeflected axis of the beam and whereby the output from the scanning means traces substantially a conical path at the remote point.

7. Apparatus according to claim 6 wherein the prism means are wedge prisms.

8. Apparatus according to any one of the preceding claims including servo means (41, 42) adapted to effect beam alignment in the said transverse plane.

9. Apparatus according to claim 8 wherein the beam is adapted to be propagated from the transmitting point towards the remote point in a substantially horizontal direction, and the servo means acts to align the beam in a substantially horizontal plane (42) and a substantially vertical plane (41).

10. Apparatus according to any one of the preceding claims including beam chopper means (18) and wherein at least a portion of the beam is modulated by said beam chopper means thereby to enhance the detection and retrieval of information from the returned beam (23).

11. Apparatus according to any one of the preceding claims including beam splitting means (12) and wherein a portion of the generated beam is split by said splitting means and is retained within the device (14) as a reference beam for comparison with the beam (23) from the remote point.

12. Apparatus according to claim 11 wherein the reference beam is adapted to be directed by fiber optical means (26) to resolver means (64), said resolver means being adapted also to receive the beam (23) from the remote point.

13. A method of utilizing a laser beam of electromagnetic radiation, said beam having a cross-sectional intensity profile which is substantially symmetrical about the maximum intensity point and has points of inflection comprising generating said electromagnetic radiation beam (15) in a device (14) adapted for location at a transmitting point, said beam being for propagation from the transmitting point to a relatively remote point (20), scanning said beam aligning said beam using information derived from the beam returned from said remote point in at least one transverse plane relative to the direction of propagation of said beam from the transmitting point towards said remote point, characterized by said scanning (29) of said beam being to obtain a time averaged apodization and involving deflecting said beam over a predetermined area at said remote point to provide over a period of time, a substantially uniform intensity over a predetermined portion of said area, said predetermined portion having the width of said laser beam cross-sectional intensity profile between substantially half intensity points of the latter, the remote point (20) being in the far field, and retrieving from the beam after propagation to the remote point in the far field, information representative of the transmissivity characteristics between the transmitting point and the far field remote point.

14. The method according to claim 13 including obtaining the information from the beam within the device (14) at the transmitting point.

15. The method according to claim 14 including retroreflecting (50) the propagated beam from the remote point (20) to the device.

16. The method according to claim 15 including splitting (12) a portion of the generated beam, and retaining said portion within the device as a reference beam for comparison with the beam from the remote point.

17. The method according to claim 16 including feeding the reference beam and the beam from the remote point to translational means (74) to provide an output signal, demodulating the signal from said translational means, feeding the demodulated signal to control means (88), and activating aligning means (41, 42) with a signal from the control means.

**Patentansprüche**

1. Vorrichtung die einen Laserstrahl (11) von elektromagnetischer Strahlung verwendet, wobei der genannte Strahl ein Querschnitts-Intensitätsprofil aufweist, das im wesentlichen symmetrisch um den maximalen Intensitätspunkt ist und Beugungs- bzw. Wendepunkte aufweist, und die Vorrichtung eine Einrichtung (14) zur örtlichen Festlegung an einem Sendepunkt und eine Einrichtung zur Erzeugung des genannten elektromagnetischen Strahlenbündels zur Fortleitung vom Sendepunkt zu einem relativen Fernpunkt (20), eine Strahlabtasteinrichtung (29), Einrichtungen (41, 42) zum Ausrichten des Strahls als Reaktion auf Richtinformation aufweist, die von dem Strahl abgeleitet wird, der vom Fernpunkt in wenigstens einer Querebene in bezug auf die Fortleitungsrichtung des genannten Strahls vom Sendepunkt (10) auf den genannten Fernpunkt (20) zu rückgeführt wird, dadurch gekennzeichnet, daß die genannte Strahlabtasteinrichtung (29) eine zeitlich gemittelte Apodisierung bzw. Abflachung des genannten Laserstrahls durch Ablenken des Laserstrahls über einen vorgegebenen Bereich am genannten Fernpunkt schafft, um innerhalb eines Zeitraums eine im wesentlichen einheitliche Intensität über einen vorgegebenen Abschnitt des genannten Bereiches zu schaffen, wobei der genannte vorgegebene Abschnitt die Breite des genannten Laserstrahlquerschnitts-Intensitätsprofils zwischen im wesentlichen Halbintensitätspunkten des letzteren aufweist, sich der genannte Fernpunkt (20) im Fernfeld befindet und Einrichtungen (64, 74, 86) vorgesehen sind, um aus dem genannten Strahl nach seiner Fortleitung zum Fernpunkt im Fernfeld Informationen zu gewinnen, die repräsentativ für die Übertragungsfähigkeitscharakteristika zwischen dem Sendepunkt und dem Fernpunkt sind.

2. Vorrichtung nach Anspruch 1, worin die Einrichtung zum Erhalt von Informationen aus dem Strahl innerhalb der Einrichtung (14) am Sendepunkt angeordnet ist.

3. Vorrichtung nach Anspruch 2, umfassend eine Retroreflektoreinrichtung (50) für die Rückführung des fortgeleiteten Strahls vom Fernpunkt zur Vorrichtung.

4. Vorrichtung nach Anspruch 3, worin die Retroreflektoreinrichtung eine Anordnung vom im wesentlichen kubischen Reflektorelementen umfaßt.

5. Vorrichtung nach Anspruch 4, worin die kubischen Reflektorelemente in zwei konzentrischen Kreisen angeordnet sind, wobei eine geringere Anzahl von Elementen in einem inneren Kreis und eine größe Anzahl von Elementen in einem äußeren Kreis vorgesehen ist.

6. Vorrichtung nach einem der vorhergehenden Ansprüche, worin die Abtasteinrichtung (29) Prismeneinrichtungen (30, 31) umfaßt, die dazu ausgebildet sind, den Strahl abzulenken und sich um eine Achse zu drehen, die im wesentlichen parallel zur nicht abgelenkten Achse des Strahls verläuft und wodurch der Ausgang von der Abtasteinrichtung eine im wesentlichen konische Bahn am Fernpunkt beschreibt.

7. Vorrichtung nach Anspruch 6, worin die Prismeneinrichtungen Keilprismen sind.

8. Vorrichtung nach einem der vorhergehenden Ansprüche, umfassend Servoeinrichtungen (41, 42), die dazu ausgebildet sind, eine Ausrichtung des Strahls in der genannten Querebene zu bewirken.

9. Vorrichtung nach Anspruch 8, worin der Strahl dazu ausgebildet ist, vom Sendepunkt zum Fernpunkt in einer im wesentlichen horizontalen Richtung fortgeleitet zu werden und die Servoeinrichtungen wirken, um den Strahl in einem im wesentlichen horizontalen Ebene (42) und einer im wesentlichen vertikalen Ebene (41) auszurichten.

10. Vorrichtung nach einem der vorhergehenden Ansprüche, umfassend eine Strahlzerhackereinrichtung (18) und worin wenigstens ein Teil des Strahls durch die genannte Strahlzerhackereinrichtung moduliert wird, wodurch die Erfassung und Wiedergewinnung von Information aus dem rückgeführten Strahl (23) gefördert wird.

11. Vorrichtung nach einem der vorhergehenden Ansprüche umfassend eine Strahlteilungseinrichtung (12) und worin ein Anteil des erzeugten Strahls mittels der genannten Strahlteilungseinrichtung abgeteilt und innerhalb der Einrichtung (14) als Bezugsstrahl für den Vergleich mit dem Strahl (23) vom Fernpunkt zurückgehalten wird.

12. Vorrichtung nach Anspruch 11, worin der Bezugsstrahl dazu ausgebildet ist, mittels optischer Fasereinrichtungen (26) auf Auflösereinrichtungen (64) gerichtet zu werden, wobei die genannten Auflösereinrichtungen auch dazu ausgebildet sind, den Strahl (23) vom Fernpunkt zu empfangen.

13. Verfahren zur Verwendung eines Laserstrahls von elektromagnetischer Strahlung, welcher Strahl ein Querschnittintensitätsprofil aufweist, das im wesentlichen symmetrisch um den maximalen Intensitätspunkt herum ist und Beugungs- bzw. Wendepunkte aufweist, umfassend die Erzeugung des genannten elektromagnetischen Strahlenbündels (15) in einer Einrichtung (14), die zur örtlichen Festlegung an einem Sendepunkt ausgebildet ist, wobei der genannte Strahl zur Fortleitung vom Sendepunkt zu einem relativen Fernpunkt (20) bestimmt ist, der genannte Strahl abgetastet wird, der genannte Strahl ausgerichtet wird, wobei Informationen benützt werden, die von dem Strahl abgeleitet

werden, der vom genannten Fernpunkt, in wenigstens einer Querebene in bezug auf die Fortleitungsrichtung des genannten Strahls vom Sendepunkt zum genannten Fernpunkt zurückkehrt, dadurch gekennzeichnet, daß das genannte Abtasten (29) des genannten Strahls erfolgt, um eine zeitlich gemittelte Apodisierung bzw. Abflachung des Strahls zu erzielen und den genannten Strahl über einen vorgegebenen Bereich am genannten Fernpunkt abzulenken, um über einen Zeitraum eine im wesentlichen einheitliche Intensität über einen vorgegebenen Abschnitt des genannten Bereiches zu erzielen, wobei der genannten vorgegebene Abschnitt die Breite des genannten Laserstrahlquerschnitts-Intensitätsprofils zwischen im wesentlichen Halbintensitätspunkten des letzteren aufweist, sich der Fernpunkt (20) im Fernfeld befindet und aus dem Strahl nach der Fortleitung zum Fernpunkt im Fernfeld Informationen gewonnen werden, die repräsentativ für die Übertragungsfähigkeitscharakteristika zwischen dem Sendepunkt und dem im Fernfeld gelegenen Fernpunkt sind.

14. Verfahren nach Anspruch 13, umfassend Gewinnung der Information aus dem Strahl innerhalb der Einrichtung (14) am Sendepunkt.

15. Verfahren nach Anspruch 14, umfassend das Retroreflektieren (50) des vom Fernpunkt (20) zur Vorrichtung fortgeleiteten Strahls.

16. Verfahren nach Anspruch 15, umfassend das Teilen (12) eines Teils des erzeugten Strahls und Zurückhalten des genannten Teils innerhalb der Vorrichtung als Bezugsstrahl zum Vergleich mit dem Strahl vom Fernpunkt.

17. Verfahren nach Anspruch 16, umfassend Zuführen des Bezugsstrahls und des Strahls vom Fernpunkt zu einer Translationseinrichtung (74), um ein Ausgangssignal zu erzeugen, Demodulieren des von der genannten Tranlsationseinrichtung abgegebenen Signals, Zuführen des demodulierten Signals zu einer Steuereinrichtung (88) und Aktivieren der Richteinrichtungen (41, 42) mittels eines Signals von der Steuereinrichtung.

## Revendications

1. Appareil utilisant un faisceau laser (11) de rayonnement électromagnétique, ledit faisceau ayant un profil transversal d'intensité qui est essentiellement symétrique par rapport au point d'intensité maximale et qui présente des points d'inflexion, l'appareil comprenant un dispositif (14) à installer au point d'émission et comprenant un dispositif pour engendrer ledit faisceau de rayonnement électromagnétique à émettre depuis le point d'émission jusqu'à un point relativement éloigné (20), un dispositif de balayage de réseau (29), des dispositifs (41, 42) pour aligner le faisceau en fonction des informations relatives à l'alignement provenant du faisceau renvoyé depuis le point éloigné dans au moins un plan transversal par rapport à la direction de propagation du dit faisceau depuis le point d'émission (10) vers ledit point éloigné (20), caractérisé en ce que le dispositif de balayage du faisceau (29) permet une apodisation uniformisée en fonction du temps du dit faisceau laser, en infléchissant le faisceau laser sur une zone prédéterminée du dit point éloigné, afin d'obtenir, au cours d'une période de temps, une intensité essentiellement uniforme sur une partie prédéterminée de ladite zone, ladite partie prédéterminée ayant la largeur du profil d'intensité transversal du dit faisceau laser entre les points essentiellement à demi-intensité de ce dernier, le point éloigné (20) étant à grande distance et des dispositifs (64, 74, 86) pour recevoir de ce faisceau, après sa propagation jusqu'au point éloigné, des informations représentatives des caractéristiques de transmissivité entre le point d'émission et le point éloigné.

2. Appareil selon la revendication 1, caractérisé en ce que le dispositif pour obtenir des informations du faisceau est contenu dans le dispositif (14) situé au point d'émission.

3. Appareil selon la revendication 2, comprenant un dispositif à rétro-réflecteur (50) pour renvoyer le faisceau transmis depuis le point éloigné vers le dispositif.

4. Appareil selon la revendication 3, caractérisé en ce que le dispositif à rétro-réflecteur comprend un ensemble d'éléments de réflecteur essentiellement cubiques.

5. Appareil selon la revendication 4, caractérisé en ce que les éléments de réflecteur cubiques sont disposés en deux cercles concentriques, un plus petit nombre d'éléments étant placés sur un cercle intérieur et un plus grand nombre sur un cercle extérieur.

6. Appareil selon l'une des revendications précédentes, caractérisé en ce que le dispositif de balayage (29) comprend des prismes (30, 31) conçus pour infléchir le faisceau, lesdits prismes étant conçus afin de pouvoir tourner sur un axe essentiellement parallèle à l'axe sans déflexion du faisceau, tandis que la sortie du dispositif de balayage suit un trajet essentiellement conique au point éloigné.

7. Appareil selon la revendication 6, caractérisé en ce que les dispositifs à prismes sont des primses à coins.

8. Appareil selon l'une des revendications précédentes, comprenant des servo-dispositifs (41, 42) conçus pour assurer l'alignement du faisceau dans ledit plan transversal.

9. Appareil selon la revendication 8, caractérisé en ce que le faisceau est conçu pour être transmis depuis le point d'émission vers le point éloigné, dans une direction essentiellement horizontale et que le servo-dispositif sert à aligner le faisceau dans un plan essentiellement horizontal (42) et dans un plan essentiellement vertical (41).

10. Appareil selon l'une des revendications précédentes, comprenant un dispositif pour hacher le faisceau (18) et caractérisé en ce qu'au moins une partie du faisceau est modulée par ledit dispositif de hachage de faisceau afin d'améliorer la détection et la réception des informations provenant du faisceau de retour (23).

11. Appareil selon l'une des revendications précédentes, comprenant un dispositif diviseur de faisceau (12), caractérisé en ce qu'une partie du faisceau engendré est divisée par ledit dispositif de division et est tenue dans le dispositif (14) pour servir de faisceau de référence pour la comparaison avec le faisceau (23) provenant du point éloigné.

12. Appareil selon la revendication 11, caractérisé en ce que le faisceau de référence est conçu pour être envoyé par un dispositif optique à fibres (26) vers un séparateur (64), ledit séparateur étant conçu également pour recevoir le faisceau (23) provenant du point éloigné.

13. Procédé d'utilisation d'un faisceau laser de rayonnement électromagnétique, ledit faisceau ayant un profil transversal d'intensité qui est essentiellement symétrique par rapport au point d'intensité maximale et qui présente des points d'inflexion, comprenant la création du dit faisceau de rayonnement électromagnétique (15) dans un dispositif (14) conçu pour être disposé au point d'émission, ledit faisceau étant transmis depuis le point d'émission jusqu'au point relativement éloigné (20), le balayage du dit faisceau, l'alignement du dit faisceau en utilisant les informations provenant du faisceau renvoyé depuis ledit point éloigné dans au moins un plan transversal par rapport à la direction de propagation du dit faisceau provenant du point d'émission vers ledit point éloigné, caractérisé en ce que ledit balayage (29) du faisceau permet d'obtenir une apodisation uniformisée dans le temps et que ledit faisceau est infléchi sur une zone prédéterminée au dit point éloigné, afin d'obtenir, pendant une période de temps, une intensité essentiellement uniforme sur une partie prédéterminée de ladite zone, ladite partie prédéterminée ayant la largeur du profil transversal d'intensité du dit faisceau laser entre les points à essentiellement demi-intensité de ce dernier, le point éloigné (20) étant à grande distance, et caractérisé par la réception du faisceau après propagation jusqu'au point éloigné à grande distance, pour obtenir des informations relatives à des caractéristiques de transmissivité entre le point d'émission et le point éloigné à grande distance.

14. Procédé selon la revendication 13, comprenant l'obtention d'informations provenant du faisceau dans le dispositif (14) au point d'émission.

15. Procédé selon la revendication 14, comprenant la rétro-réflexion (50) du faisceau envoyé depuis le point éloigné (20) vers le dispositif.

16. Procédé selon la revendication 15, comprenant la division (12) d'une partie du faisceau produit et la rétention de ladite partie dans le dispositif sous forme de faisceau de référence pour la comparaison avec le faisceau provenant du point éloigné.

17. Procédé selon la revendication 16, comprenant la transmission du faisceau de référence et du faisceau provenant du point éloigné vers un dispositif de traduction (74) fournissant un signal de sortie, la démodulation du signal provenant du dit dispositif de traduction, l'envoi du signal démodulé au dispositif de commande (88) et l'activation des dispositifs d'alignement (41, 42) avec un signal provenant du dispositif de commande.

Fig.1

FIG. 2.

FIG. 5.

FROM PHOTOMULTIPLIER TUBE

$I+I_0$

DEMODULATING ELECTRONIC

CALCULATES $I/I_0$

$I$

$I_0$

$I/I_0$

CONICAL SCAN POSITION SIGNALS FROM CSM

TOP
RIGHT
BOTTOM
LEFT

SERVO CONTROL ELECTRONICS

CONTROL COMPUTER
(CONTROLS BEAM AIMING)
(ACCUMULATES DATA)
(MEASURES BEAM WIDTH)

VERTICAL SERVO

HORIZONTAL SERVO

OUTPUT TO CONTROL VSM AND HSM

2

Fig. 3.

Fig. 4.

FIG. 6

0 100 357

Fig. 1.

Fig. 8

Fig. 9